# EUROPEAN PATENT APPLICATION

(11) **EP 4 246 180 A1**
(43) Date of publication of application: **20.09.2023**
(21) Application number: 23159779.0
(22) Date of filing: 02.03.2023
(51) Int. Cl.: G01S 13/02, H04S 7/00

(54) **AUDIO SYSTEM SOUND TUNING USING ULTRAWIDEBAND RADIO SENSING**

(30) Priority: 14.03.2022 US 202217654719
(71) Applicant: NXP USA, Inc., Austin TX 78735 (US)
(72) Inventor: Guntur, Surendra, 5656AG Eindhoven (NL); Fadar, Joachim, 5656AG Eindhoven (NL); KÜCHLER, Wolfgang, 5656AG Eindhoven (NL)
(74) Representative: Hardingham, Christopher Mark

(57) **Abstract**

An audio configuration system receives an analyzes ultrawideband radio return signals resulting from one or more pulsed UWB probe signals. The system receives the UWB return signals. The UWB return signals are used to determine a spatial orientation of one or more objects (e.g., one or more seats in a passenger cabin of a vehicle). The system causes audio circuitry to output audio signals according to audio configuration parameters determined by the spatial orientation of the object or objects.

## Description

### Field of the Invention

Embodiments of the subject matter described herein relate to automotive information, entertainment, and telematic systems.

### BACKGROUND OF THE INVENTION

Automobiles are increasingly provided with electronic sensors and systems for various purposes including vehicle control, providing information to a driver, and providing entertainment. These systems can include wired and wireless sensors and other components. Some of these systems may be configured for wireless communication with devices installed at various locations within the vehicle. Often, automobiles include electronic systems that may provide both entertainment such as music and information such as navigational assistance. Ultrawideband radio devices may adapted for wireless communications between devices and for position sensing using radar and other methods.

Automotive entertainment systems and related systems deliver audio information to vehicle occupants via speakers placed in various locations. Such systems are often configured or are configurable to optimize various audio parameters to provide a desired listener experience. In some instances, a vehicle manufacturer may set audio parameters such as the relative gain and phase of signals sent to various speakers based upon the vehicle dimensions and speaker placements. Some systems may also be configured to adaptively tune audio parameters during vehicle operation. For instance, some vehicle audio systems may be configured to dynamically adjust the volume, frequency content, or other characteristics of audio signals in response road noise or other scenarios.

### SUMMARY OF THE INVENTION

According to a first aspect of the present disclosure, there is provided an audio configuration system comprising: control circuitry configured to be coupled to radio circuitry and to audio circuitry; and memory coupled to the control circuitry; wherein the audio configuration system is configured to: receive, from UWB radio circuitry coupled to the control circuitry, UWB return signals corresponding to pulsed UWB probe signals transmitted by the UWB radio circuitry; determine a spatial orientation of one or more objects by analyzing the UWB return signals using the control circuitry; and cause audio circuitry coupled to the control circuitry to output audio signals to one or more speakers in accordance with audio configuration parameters corresponding to the spatial orientation of the one or more objects.

In one or more embodiments, when the audio configuration system uses the control circuitry to analyze the UWB return signals, the control circuitry is configured to determine times-of-flight of the UWB return signals from the one or more objects.

In one or more embodiments when the audio configuration system uses the control circuitry to analyze the UWB return signals, the control circuitry is configured to determine angles-of-arrival of the UWB return signals from the one or more objects. In one or more embodiments the audio configuration system is further configured to: determine a memory location in the memory using the spatial orientation of the one or more objects; and retrieve, as the audio configuration parameters, configuration parameters stored at the memory location.

In one or more embodiments causing the audio circuitry to output the audio signals to the one or more speakers in accordance with the audio configuration parameters includes: causing a phase shift to at least one of the audio signals; causing an amplitude change to at least one of the audio signals; or causing a phase shift and an amplitude change to at least one of the audio signals.

In one or more such embodiments causing the amplitude change to at least one of the audio signals includes applying a frequency-dependent amplitude adjustment to at least one of the audio signals.

In one or more embodiments the audio configuration system is further configured to: receive additional UWB return signals corresponding to additional pulsed UWB probe signals using the UWB radio circuitry; determine that the spatial orientation of the one or more objects has changed to a different spatial orientation by analyzing the additional UWB return signals using the control circuitry; determine different audio configuration parameters that correspond to the different spatial orientation of the one or more objects; and cause the audio circuitry to output subsequent audio signals to the one or more speakers in accordance with the different audio configuration parameters.

In one or more embodiments when the control circuitry analyzes the UWB return signals, the control circuitry is configured to: determine, using the UWB return signals, a location and an incline angle of a vehicle passenger seat based on an angle of arrival and a time of flight of one or more of the UWB return signals.

In one or more embodiments at least a portion of the UWB return signals includes UWB data communication signals configured for communication with the control circuitry.

In one or more embodiments, when the control circuitry analyzes the UWB return signals, the control circuitry is configured to: determine, using the UWB return signals, that one or more windows of a vehicle passenger cabin are open.

According to a second aspect of the present disclosure, there is provided a method of tuning outputs of audio circuitry using an audio configuration system, the method comprising: receiving, using UWB radio circuitry coupled to control circuity of the audio configuration system, UWB return signals corresponding to pulsed UWB probe signals; determining a spatial orientation of one or more objects by analyzing the UWB return signals using control circuitry of the audio configuration system; determining audio configuration parameters corresponding to the spatial orientation of the one or more objects using the control circuitry; and operating the control circuitry to cause the audio circuitry to output audio signals to one or more speakers in accordance with the audio configuration parameters.

In one or more embodiments, determining the spatial orientation of the one or more objects includes using the control circuitry to determine times-of-flight of the UWB return signals from the one or more objects.

In one or more embodiments, determining the spatial orientation of the one or more objects includes using the control circuitry to determine angles-of-arrival of the UWB return signals from the one or more objects.

In one or more embodiments the method further comprises: determining, using the control circuitry, a memory location in memory coupled to the control circuitry wherein the control circuitry determines, the memory location based on the spatial orientation of the one or more objects; and retrieving, as the audio configuration parameters, configuration parameters stored at memory location.

In one or more embodiments, causing the audio circuitry to output audio signals to one or more speakers in accordance with the audio configuration parameters includes: applying a phase shift to one or more of the audio signals; adjusting an amplitude of one or more of the audio signals; or applying a phase shift to one or more or the audio signals and adjusting an amplitude of one or more of the audio signals.

In one or more embodiments, adjusting the amplitude of the one or more of the audio signals includes applying a frequency-dependent amplitude adjustment to the one or more of the audio signals.

In one or more embodiments, determining the spatial orientation of the or more objects includes determining a distance and incline angle of a vehicle passenger seat based on an angle-of-arrival (AoA) and a time-of-flight (ToF) of one or more of the UWB return signals.

In one or more embodiments at least a portion of the UWB return signals includes UWB data signals configured for communication with the control circuitry.

In one or more embodiments determining the spatial orientation of the one or more objects includes determining, based on the UWB return signals, that one or more windows of a vehicle passenger cabin are open.

In one or more embodiments the method further comprises: receiving additional UWB return signals corresponding to additional pulsed UWB probe signals using the UWB radio circuitry; determining that the spatial orientation of the one or more objects has changed to a different spatial orientation by analyzing the additional UWB return signals using the control circuitry; determining different audio configuration parameters corresponding to the different spatial orientation of the one or more objects using the control circuitry; and operating the control circuitry to cause the audio circuitry to output subsequent audio signals to the one or more speakers in accordance with the different audio configuration parameters.

Thus, in one or more embodiments, an audio configuration system is provided. The system includes control circuitry configured to be coupled to radio circuitry and to audio circuitry; and memory coupled to the control circuitry. The system is configured to: receive, from UWB radio circuitry coupled to the control circuitry, UWB return signals corresponding to pulsed UWB probe signals transmitted by the UWB radio circuitry. The system is further configured to determine a spatial orientation of one or more objects by analyzing the UWB return signals using the control circuitry; and to cause audio circuitry coupled to the control circuitry to output audio signals to one or more speakers in accordance with audio configuration parameters corresponding to the spatial orientation of the one or more objects.

In another embodiment a method of tuning outputs of audio circuitry using an audio configuration system is provided. The method includes receiving, using UWB radio circuitry coupled to control circuity of the audio configuration system, UWB return signals corresponding to pulsed UWB probe signals. The method further includes determining a spatial orientation of one or more objects by analyzing the UWB return signals using control circuitry of the audio configuration system. The method further includes determining audio configuration parameters corresponding to the spatial orientation of the one or more objects using the control circuitry. The method further includes operating the control circuitry to cause the audio circuitry to output audio signals to one or more speakers in accordance with the audio configuration parameters.

### BRIEF DESCRIPTION OF THE DRAWINGS

The present disclosure is illustrated by way of examples, embodiments and the like and is not limited by the accompanying figures, in which like reference numbers indicate similar elements. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:
FIG. 1 is schematic block-level diagram showing elements of an audio configuration system operating within a vehicle passenger cabin according to embodiments herein.
FIG. 2 is schematic block-level diagram showing elements of an example audio configuration system suitable for use in the environment of FIG. 1 and other environments.
FIG. 3 is a flow chart illustrating steps of an example method of tuning audio circuitry using the audio configuration system of FIGs. 1-2.
FIG. 4 is a schematic block-level diagram of an environment in which embodiments herein may be practiced.

### DETAILED DESCRIPTION

The following detailed description provides examples for the purposes of understanding and is not intended to limit the invention or the application and uses of the same. Furthermore, there is no intention to be bound by any expressed or implied theory presented in the preceding technical field, background, or the following detailed description.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements or regions in the figures may be exaggerated relative to other elements or regions to help improve understanding of embodiments of the invention.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. The term "coupled," as used herein, is defined as directly or indirectly connected in an electrical or non-electrical manner. As used herein the terms "substantial" and "substantially" mean sufficient to accomplish the stated purpose in a practical manner and that minor imperfections, if any, are not significant for the stated purpose.

Directional references such as "top," "bottom," "left," "right," "above," "below," and so forth, unless otherwise stated, are not intended to require any preferred orientation and are made with reference to the orientation of the corresponding figure or figures for purposes of illustration.

It will be appreciated that the steps of various processes described herein are non-limiting examples of suitable processes according to embodiments and are for the purposes of illustration. Systems and devices according to embodiments herein may be use any suitable processes including those that omit steps described above, perform those steps and similar steps in different orders, and the like. It will also be appreciated that well-known features may be omitted for clarity.

Audio tuning is the process of determining an optimal set of audio configuration parameters required to provide good quality sound experience for various configurations and/or locations in an environment such as a vehicle or building, followed by applying the right audio configuration parameters obtained from the previous step for a particular scenario or configuration.

Sets of optimal audio configuration parameters can be obtained by simulating and modelling the interior of a vehicle or building and analyzing the sound fields at different locations. In the case of vehicle seating positions, a set of optimal audio configuration parameters (e.g. gain, frequency equalization, delay between different sources, and so on) may be determined for multiple possible arrangements of seating positions and other parameters such as seatback positions, levels of road noise, and so on. In particular, speakers that deliver high-frequency (i.e., short wavelength) sound such as "tweeters" must be directed correctly so as to provide good audio experience to the passengers. Moving parts inside the cabin such as seat positions, passengers and other large objects can cause changes in the acoustic quality which can be compensated to some extent by the choice of the audio configuration parameters

Implemented an optimal or otherwise desired set of audio configuration parameters may include determining the current special configuration of the environment, and then applying a set of audio configuration parameters corresponding to that configuration. In the example of seating in a vehicle cabin, relevant factors include the current measured seat position or orientation of one or more seats. A set of audio configuration parameters may be applied to provide the best audio experience for occupants seated in the detected seating configuration. An audio system may have a set of default set of audio configuration parameters. If the seat configuration is changed by moving one or more seats forward or backward, or if the height or incline of one or more seats is changed, these changes can be measured and a different set of audio configuration parameters corresponding to the new seating configuration can be applied. However, for such an approach to work, systems and methods to accurately measure changes in seating position or other changes to the environment are needed.

Proposed audio tuning approaches for vehicles and other environments using depth-sensing camera systems, lidar, and sonar have disadvantages, particularly in automotive applications. Specifically, they may require additional equipment not typically present in automobiles, require expensive setup and calibration processes, and may not have sufficient measurement accuracy.

Accordingly embodiments herein disclose systems and methods for using ultrawideband ("UWB") radio sensing to determine the spatial configuration of an area of interest such as a vehicle cabin. Although examples herein may be described in the context of a passenger vehicle cabin, it will be appreciated that nothing herein is intended to limit embodiments to vehicles. It will be further appreciated that embodiments herein may also be applied to home theaters, offices, and any other suitable environments.

As an example an in-vehicle infotainment system may include a UWB impulse radio device mounted on or within it that serves as a reference position for measurements made within the vehicle. The UWB device may also be mounted at other suitable locations such as at the roof of the vehicle, for example near or on the rear-view mirror. The UWB device can be configured to operate in a radar mode in which it transmits pulsed probe signals and receives the reflected return signals. The UWB device can measure a channel response and perform signal processing on the channel to calculate or otherwise determine Time of Flight ("ToF") and Angle of Arrival ("AoA") estimates for the return signals in order to estimate the distance and tilt of the seats with respect to its reference location.

Using such UWB radio measurements, an audio configuration system can identify a current seat configuration; identify or determine desirable audio configuration parameters corresponding to that configuration; and apply the tuning parameters for that configuration to audio signals before they are transmitted to speakers, providing a sound experience that is tailored to the current seating configuration. The audio configuration system can perform periodic measurements and detect changes in its environment and or seating positions and orientations. Alternatively, the audio configuration system may be configured to perform new measurements at pre-defined times, or in response to receiving triggering signals from other devices which may correspond to particular events such as the vehicle coming to rest, accelerating, or another vehicle system detecting that a user has adjusted the seating configuration, as nonlimiting examples.

In one or more embodiments, an audio configuration system may be configured to detect signals from, mobile phones or other user devices equipped UWB radios that are mounted on or in seats at predefined locations such as sides of the headrests. One UWB device can be used for sensing the seating configuration and one or more other UWB devices can be configured to communicate with the reference sensing device. ToF and AoA can be measured between pairs of devices to determine locations and orientations of the seats. Audio configuration parameters can be applied in a pairwise manner for each pair of devices. The process can be repeated with other seats or can be jointly estimated with single or multiple ranging cycles

In one or more embodiments, a UWB sensing device can be equipped with multiple antennas and/or transmitters and receivers in a multi-static radar configuration. A receiver (RX) and transmitter (TX) may be placed in separate UWB modules mounted in a vehicle cabin. It will be understood than any suitable configuration of one or more transmitters and one or more receivers in any suitable spatial arrangement may be used.

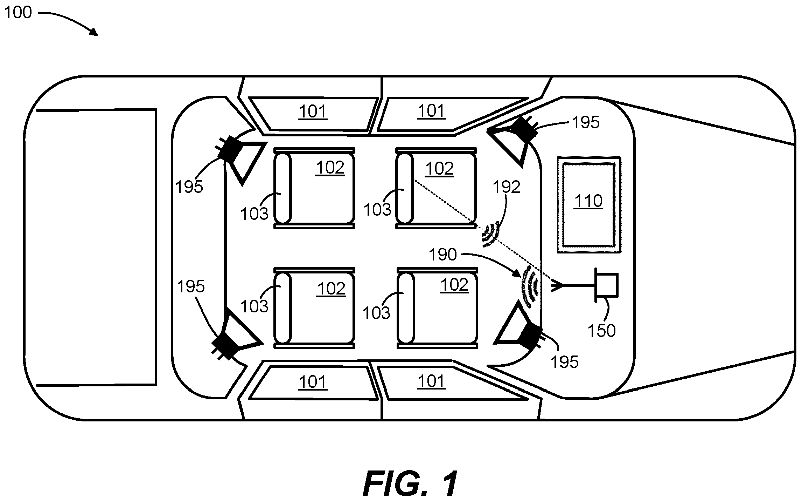

FIG. 1 shows an example environment in which systems and methods herein may be practiced. As shown, a vehicle 100 has four passenger seats 102, each of which has a seatback 103. Each seat 102 may have a spatial orientating with varying degrees of freedom. For example, seats in vehicles may often be moved backward and forward and in some vehicles the base of a seat may be raised or lowered relative to the floor. Similarly, some seat backs such as the seatbacks 103 may be adjusted to a desired degree of incline.

The vehicle 100 has an infotainment system 110 (represented by a display unit) such as may be found in passenger and other vehicles. For example, the infotainment system 110 may include multipurpose visual display for navigation, operating a radio tuner, and other functions. The infotainment system 110 may be coupled to (or include) a set of speakers 195 which can be used to provide navigational prompts, play music, or provide other audio signals to passengers in the vehicle 100. The vehicle 100 may have a variety of wired and wireless sensors. Increasingly vehicles may be capable of using ultrawideband (UWB) signaling for data communication and/or sensing purposes (e.g., radar). As shown, the vehicle 100 has UWB circuitry (e.g., one or more UWB transceivers, and/or sets of one or more discrete UWB transmitters and one or more UWB transceivers). It will be understood that the speakers 195 are shown as examples only and that audio systems may include any number of speakers as well as different types of speakers (e.g., high-frequency "tweeters" and low-frequency "woofers") in any suitable configuration.

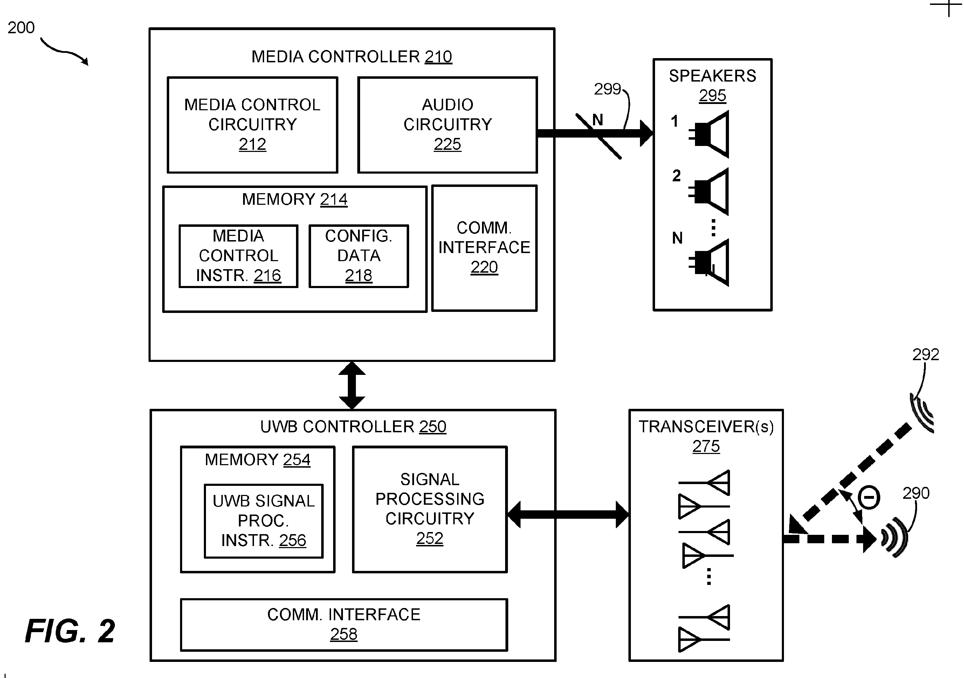

An infotainment system including audio circuitry such as the infotainment system 110 may include or may be coupled to an audio configuration system according to embodiments herein (as described further below in connection with FIG. 2). As shown in FIG. 1, systems (including systems such as the infotainment 110 as a non-limiting example) may use UWB circuitry such as the UWB circuitry 150 shown to detect the positioning of objects in the cabin of a vehicle such as the vehicle 100. The UWB circuitry 150 may be used to transmit pulsed probe signals 190 and to receive return signals that scatter off (or otherwise originate from) objects such as the seats 102, or windows 101 of the vehicle 100. One return signal 192 is shown schematically in FIG. 1 originating from the seatback 103 of one of the seats 102 of the vehicle 100 and propagating along a straight line path to the UWB circuitry 150. It will be understood that return signals 192 resulting from transmission of UWB probe signals 190 may follow more complicated paths. For example, an object may scatter probe signals 190 in multiple directions resulting in multiple return signals having varying phase and amplitudes. In one or more embodiments, the transmission of probe signals 190 may be configured to cause one or more electronic devices to generate and transmit data packets or other signals as one or more return signals 192.

As an example, the spatial configuration of the vehicle 100 can be characterized by a series of orientation variables for each seat 102. For purposes of this example, a seat 102 may be adjusted with three degrees of freedom: a displacement of that seat 102 from a reference point such as the location of the UWB circuitry 150, a height, and a tilt (i.e., an angle of the seatback 103 of that seat 102). In an example, one seat 102 ("Seat 1") may have four possible displacements (D₁₁, D₁₂, D₁₃, D₁₄), three possible height positions (H₁₁, H₁₂, H₁₃) and five possible tilt angles (Θ₁₁, Θ₁₂, Θ₁₃, Θ₁₄, Θ₁₅). Meanwhile another seat 102 ("Seat 2") may have 3 possible adjustable displacement positions (D₂₁, D₂₂, D₂₃), 2 possible height positions (H₂₁, H₂₂) and 4 possible tilt angles (Θ₂₁, Θ₂₂, Θ₂₃, Θ₂₄) and so on.

Thus, in this example, a seat configuration can be described as a 3-tuple of the form {Distance, Height, Tilt}. In one instance, a predefined set of audio configuration parameters can be associated with a single seat configuration (representing one or more of a desired gain, delay, frequency equalization, and so on). In other applications, it may be desirable to associate sets of audio configuration parameters with an ensemble configuration of multiple seats. In some instances, each set of audio configuration parameters may be configured to represent specific desired performance characteristics. In other instances, each set audio configuration parameters may be configured to represent a relative change (such as a relative increase in gain, a relative phase adjustment, and the like) such that individual sets of audio configuration parameters (e.g., one set of audio configuration parameters for each seat) represent signal processing operations that may be applied sequentially to produce a desired result.

In one or more embodiments, the audio configuration parameters for different possible configurations are predetermined based on simulation and modelling results and stored in memory of the audio configuration system (e.g., in memory 214 of the system 200 described below in connection with FIG. 2). In one or more embodiments, an audio configuration system may store information (e.g., as part of configuration data 218 of the system 200) that specifies desired sound quality metrics. In such embodiments, the system may execute instructions (e.g., media control instruction 216 of system 200) to measure audio signals and iteratively apply audio configuration parameters until the system determines that the desired sound quality metrics have been achieved.

FIG. 2 is a block-level schematic diagram of an example system 200 for configuring audio signals in a vehicle or any other suitable environment. In this example, the system 200 includes a media controller 210 coupled to a set of speakers 295 (e.g., speakers 195) and a UWB controller 250 coupled to (or including) one or more transceivers 275. It will be understood that the system 200 is described for purposes of understanding and that systems according to embodiments herein need not include each element of the system 200 and may include elements shown and described herein in any suitable arrangement. For example, in one or more embodiments, various elements shown may be combined into a single device.

The media controller 210 includes media control circuitry 212 and memory 214 coupled to the media control circuitry 212. As shown the memory 214 stores media control instructions 216 and configuration data 218. The media controller 210 also includes audio circuitry 225 suitable to drive speakers 295 to output audio signals 299. The audio signals 299 may be any suitable audio signals including, but not limited to, music, navigation instructions, warning sounds, and the like. The speakers 295 may include any suitable number of speakers in any suitable arrangement and may include one or more speaker types (e.g., "tweeters," "woofers," and the like). The audio circuitry 225 is configured to receive audio signals generated within the media controller 210 or received by the media controller 210 (e.g., from a compact disc player, a radio tuner, a satellite radio service, or from another device via an audio input port or via a wireless data protocol such as Bluetooth). The audio circuitry 225 may be configured to apply additional signal processing to audio signals before outputting them as audio signals 299. For example, the audio circuitry 225 may apply equalization filters to emphasize or de-emphasize certain frequency ranges in response to input from a user. The media controller may also use the media control circuitry 212 (executing media control instructions 216) to output the audio signals 299 in accordance with configuration data 218 retrieved from the memory 214.

In embodiments herein, a device such as the media controller 210 may be configured to apply dynamic signal processing operations before outputting the audio signals 299 based on audio configuration parameters stored in the configuration data 218 and the spatial orientation of one or more objects (e.g., positioning of seats such as the seats 102 and the backs of such seats such as the seatbacks 103). The configuration data 218 may include sets of audio parameters that correspond to different possible configurations of the seats in a vehicle cabin. Nonlimiting examples of audio parameters forming part of the configuration data 218 include: gain parameters indicating desired relative or absolute amplitudes of one or more of the audio signals 299 routed to each speaker 295; phase parameters indicating desired relative or absolute phases of one or more of the audio signals 299 routed to each speaker 295; equalization parameters indicating desired frequency characteristics of one or more of audio signals 299 routed to each speaker 295, and so on.

The media controller 210 may communicate with a UWB controller 250 that has signal processing circuitry 252 and memory 254 storing UWB signal processing instructions 256. The signal processing circuitry 252 is coupled to (or includes) a set of one or more transceivers 275. In one or more embodiments, the transceiver(s) 275 may include one or more monolithic transceivers. In one or more embodiments, the transceiver(s) 275 may include multiple discrete transmitters and receivers. The UWB controller 250 may receive instructions from the media controller 210 or otherwise be controlled by the media controller 210 via a communication interface 258 coupled to the signal processing circuitry 252.

Similarly to the illustration of FIG. 1, the media controller 210 (e.g., the infotainment system 110) may use the UWB controller 250 (e.g., the UWB circuitry 150) to transmit pulsed UWB probe signals 290 (e.g., probe signals 190) and to receive UWB return signals 292 (e.g., return signals 192) resulting from transmission of the probe signals. It will be understood that the time delay (or time-of-flight, "ToF") between transmission of probe signals 290 and the reception of one or more return signals 292 corresponding to those probe signals can be used to calculate or otherwise determine an estimated distance to an object responsible for scattering (or otherwise producing) one or more probe signals 290 to produce one or more of the return signals 292 given the known propagation speed of radio waves through air or any other environment.

Similarly, the transceiver(s) 275 may be configured to enable the signal processing circuitry 252 to determine an angle between the source of a return signal 292 and any suitable reference direction (i.e., the angle of arrival, or "AoA", of the corresponding return signal 292, represented by the angle Θ shown in FIG. 2 as defined with reference to an arbitrary horizontal axis for purposes of illustration). In one or more embodiments, as shown, the UWB controller 250 may use the signal processing circuitry 252 to execute UWB signal processing instructions 256 stored in the memory 254 in order to measure the ToF and AoA of each return signal. It will be understood that any suitable probe signals 290 (e.g., probe signals 190) may be used, including but not limited to, one or more highly directional beams that may be electronically or physically steered in a range of directions according to known techniques or broad beams.

In one example, the ToF between two UWB devices operating respectively in initiator and responder modes can be estimated using circuitry configured to record timestamps of various events or phases of a UWB frame at both at the initiator device and the responder device. signal processing circuitry of both the initiator device and the responder device can estimate the channel impulse response by correlating a predefined part of a received frame preamble (a training sequence) with the expected training sequence resulting in correlation peaks at different time lags corresponding to the different multipath signal components. The estimated channel impulse response together with the timestamps recorded earlier can be used to refine the initial time-of-arrival estimate for the responder device. Improved timestamps can then be sent to the initiator device which computes the actual ToF from which distances of various objects such as seats is computed. For AoA computation multiple antennas and receivers can be used to compute the direction of arrival from which seat orientations are calculated or otherwise determined. Alternatively, in or more embodiments, the transceiver(s) 275 include a steerable array of directional antenna elements including, but not limited to, an electrically-steerable phased array.

It will be understood that although certain elements of embodiments herein are described as having processing circuitry executing instructions (e.g., the media control circuitry 212 executing media control instructions 216 or the signal processing circuitry 252 executing UWB signal processing instructions 256) various elements and functions of embodiments herein may be achieved in any suitable manner, including any suitable arrangement of known elements such as microprocessors, microcontrollers, field programmable gate arrays (FPGAs), application-integrated circuits (ASICs), analog circuits, and the like. It will be further understood that any suitable signal processing methods may be used to estimate a channel impulse response, determine times of flight, determine angles of arrival of signals and so on, including, but not limited to, methods disclosed in U.S. Patent No. 10,404,490.

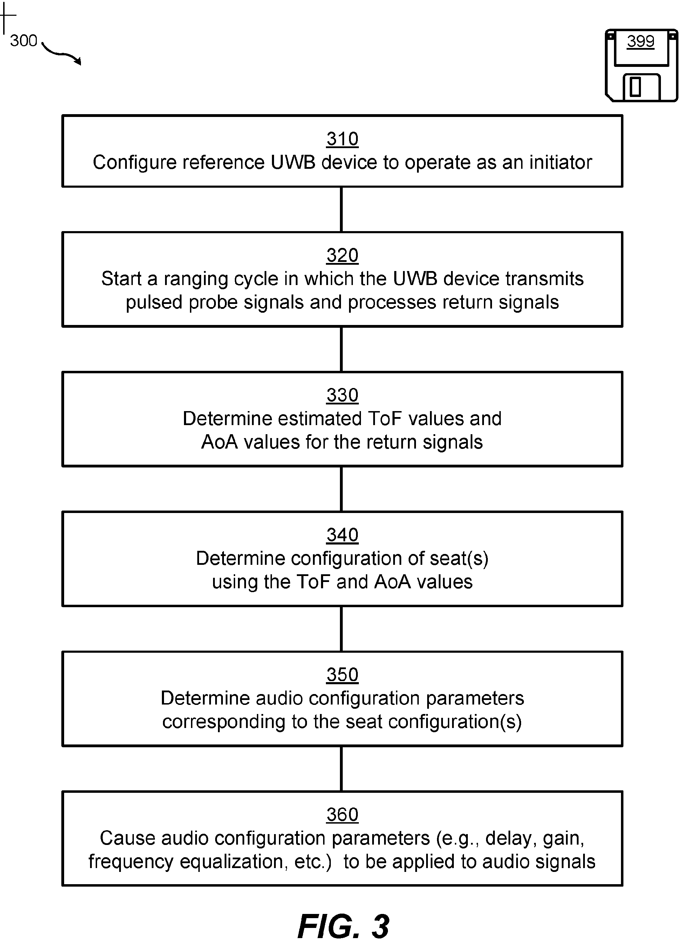

FIG 3. is a flow diagram illustrating an example process 300 suitable for use with an audio configuration system such as the system 200 (which may include parts of a system such as the infotainment system 110 and/or include parts of such systems), according to embodiments herein. In one more embodiments, a nontransitory storage medium 399 or other arrangement of nontransitory storage stores executable instructions for performing the process 300. It will be understood that although the process 300 is depicted as an ordered series of steps, in or more embodiments individual steps may be omitted or performed in any suitable order, including but not limited to the ordering shown in FIG. 3 and described below.

The process 300 includes blocks 310, 320, 330, 340, 350, and 360. At block 310 ("configure reference UWB device to operate as an initiator"), the system configures a UWB device (e.g., the UWB controller 250) as an initiator in order to transmit probe signals (e.g., probe signals 190, 290). In this example, system begins at block 310 in response to determining that a designated time has arrived or that a triggering event has occurred. In one more embodiments, the UWB device operates in a radar mode in which the probe signals are analog signals suitable for use as radar probe signals configured to reflect from objects of interest such as passenger seat in a vehicle (e.g., a seat 102), a seatback (e.g., a seatback 103) and/or one or more objects within such objects configured to produce a reflected signal (e.g., a return signal 192, 292) or any other suitable objects, including windows (e.g., the windows 101 of the vehicle 100) as nonlimiting examples.

In one more embodiments, the initiator operates in a "transmit" mode in which at least a portion of the probe signals are digital signals configured to cause other devices to communicate with the UWB device and at least a corresponding portion of the return signals (e.g., return signals 192, 292) are UWB digital communication signals configured for communication between an originating device and the UWB device. For example, when a UWB-enabled mobile phone is mounted on a seat and is configured as a responder, then the initiator device in the infotainment unit can communicate with the responder directly (i.e., in a non-radar mode).

At block 320 ("start a ranging cycle in which the UWB device transmits pulsed prove signals and processes return signals"), the system enters a ranging cycle in which the UWB device transmits one or more pulsed probe signals (e.g., probe signals 190, 290) and receives one or more return signals (e.g., return signals 192, 292) corresponding to the probe signal(s). In the example shown in FIG. 3 the return signals are assumed to be reflections. However, it will be understood that in one or more embodiments, one or more of the return signals can be signals generated by one or more electronic device configured to transmit signals to the UWB device in response to reception of a probe signal by that electronic device. It will be further understood that the systems and methods herein are suitable for use with various electronic devices operating as sources of return signals including, but not limited to, smart phones having UWB radio circuitry, UWB beacon devices, and so on.

The UWB device collects return signals for a predetermined time after each probe signal or set of probe signals transmitted. The time-dependent power received by the UWB device will have peaks corresponding to the round-trip ToF for the reflected return signals (or generated return signals) triggered by the probe signals. In one or more embodiments, the UWB device may use signal processing circuitry and memory (e.g., the signal processing circuitry 252 and memory 254) to digitize, store, and analyze the return signals. Although various examples of time-domain analysis may be described, it will be understood that a system according to embodiments herein may use any suitable methods to store, manipulate and analyze information represented UWB radio signals, including but not limited to frequency-domain representation and manipulation of such signals. Various analysis methods may be implemented and performed using any suitable arrangement of processing circuitry, memory, and instructions stored in such memory and executed by said processing circuitry.

At block 330 ("determine estimated ToF values and AoA values for the return signals"), the system analyzes the return signals corresponding to the probe signals to compute or otherwise determine estimated ToF and AoA values using signal processing circuitry (e.g., the signal processing circuitry 252), as explained above. It will be understood that if there are multiple scattering objects that are separated from each other, the system will generally determine multiple pairings that include a ToF value paired with an AoA value, with each such pair corresponding to a particular object responsible for scattering or generating a return signal. At this block, the system may optionally determine that one or more pairs of the form {ToF, AoA} corresponding to objects such as seats (e.g., seats 102), seatbacks (e.g., seatbacks 103), or other objects (e.g., windows 101). The system may be provided with executable signal processing instructions (e.g., UWB signal processing instructions 256) which, when executed by signal processing circuitry of the system (e.g., the signal processing circuitry 252), enable the system to determine which return signals correspond to objects of interest. In the example of FIG. 3, the objects of interest are seats (e.g., seats 102). It will be understood that although descriptions to follow refer to seats, that systems and methods according to embodiments herein may be configured to detect any suitable objects and to adjust the audio configuration of a media system (e.g., the infotainment system 110) based on the positioning and other spatial configuration details of those objects). For instance, one or more embodiments include detection of windows (e.g., the windows 101) and determining whether one or more windows are open, closed, or a degree to which those windows are open.

At block 340 ("determine configuration of seat(s) using the ToF and AoA values"), the system determines a spatial configuration for each object of interest. In the example of FIG. 3, the system estimates or otherwise determines a spatial configuration that includes the distance of a seat (e.g., a seat 102) from a suitable reference point (e.g., the distance of a seat 102 from the infotainment system 110 of FIG. 1), as well as other parameters such as the height of the seat and the tilt of the seatback of the seat (e.g., a seatback 103 of a seat 102). When there are multiple objects of interest, it will be understood that the system determines, in one or more embodiments, an overall configuration of the objects of interest. It will be understood that this configuration may be represented in any suitable manner such as a binary string or other identifier. As an example, if the objects of interest are two seats (e.g., two adjacent seats 102 such as a driver seat and a front passenger seat as shown in FIG. 1), the system may determine a binary string that encodes a distance, height, and seatbelt tilt of each seat. For instance, because the seats in a vehicle (e.g., the seats 102 in the vehicle 100) are located at certain angles with respect to the reference device (e.g. 150 in FIG 1), the value of the AoA estimate can be used to identify the seat (e.g. to distinguish a driver seat from a front passenger seat ). It will be understood that system may be configured to assign one of a predetermined number of discrete possible values to each measured parameter in order to unambiguously identify a configuration of the objects of interest using any suitable method, including but not limited to using a lookup table stored in memory of the system (e.g., forming part of the configuration data 218 stored in the memory 214) or accessing a content-addressable memory device forming part of the memory 214, as non-limiting examples.

At block 350 ("determine audio configuration parameters" corresponding to the seat configuration(s)"), the system determines audio configuration parameters for tuning audio signals (e.g., audio signals 299 delivered to speakers 295) that correspond to the spatial configuration(s) determined at block 340. In the example of FIG. 3, the system looks up the audio configuration parameters in a lookup table stored in memory (e.g., stored in the memory 214 as part of the configuration data 218). An audio configuration system according to embodiments herein may determine the correct audio configuration parameters using any suitable methods including, but not limited to, accessing a lookup table addressed using an identifier of the overall spatial configuration or by identifying audio configuration parameters corresponding to subsets of the objects of interest that identify sequential audio signal processing operations to apply to produce a desired set of audio signals (e.g., audio signals 199, 299) to be delivered to a set of speakers (e.g., speakers 195, 295).

The following are nonlimiting examples of audio configuration parameters suitable for use in embodiments herein: (1) values that indicate a relative audio signal level of one or more of the audio signals transmitted to each of a set of speakers (e.g., speakers 195, 295); (2) values that indicate a relative phase or delay of one or more of the audio signals transmitted to each of the set of speakers; and (3) values that indicate the result of desired frequency-dependent filter applied to one or more audio signals transmitted to one or more of the set of speakers (i.e., a set of one or more frequency equalization settings, or "EQ" setting for one or more audio frequencies one or more audio frequency bands).

At block 360 ("cause audio configuration parameters (e.g. delay, gain, frequency equalization, etc.) to be applied to audio signals") the system uses audio circuitry (e.g., audio circuitry 225) to output audio signals (e.g., audio signals 299) according to the audio configuration parameters retrieved at block 350. For example, the system may receive one or more audio signals (e.g., music or other audio signals from an infotainment system 110) intended for the set of speakers and apply appropriate signal processing operations to those signals before they are transmitted to the speakers. Non-limiting examples of such signal processing operations include amplification or attenuation of one or more signals; application of a phase delay to one or more signals; passive or active filtering (i.e., applying frequency-dependent attenuation, frequency-dependent amplification, or a combination of frequency-dependent amplification and attenuation.

In one more embodiments, the example process 300 and similar processes are performed at one or more predetermined times or at predetermined intervals. In one or more such embodiments, the configuration of an audio system is updated from a first configuration to a second configuration in response to the audio configuration system

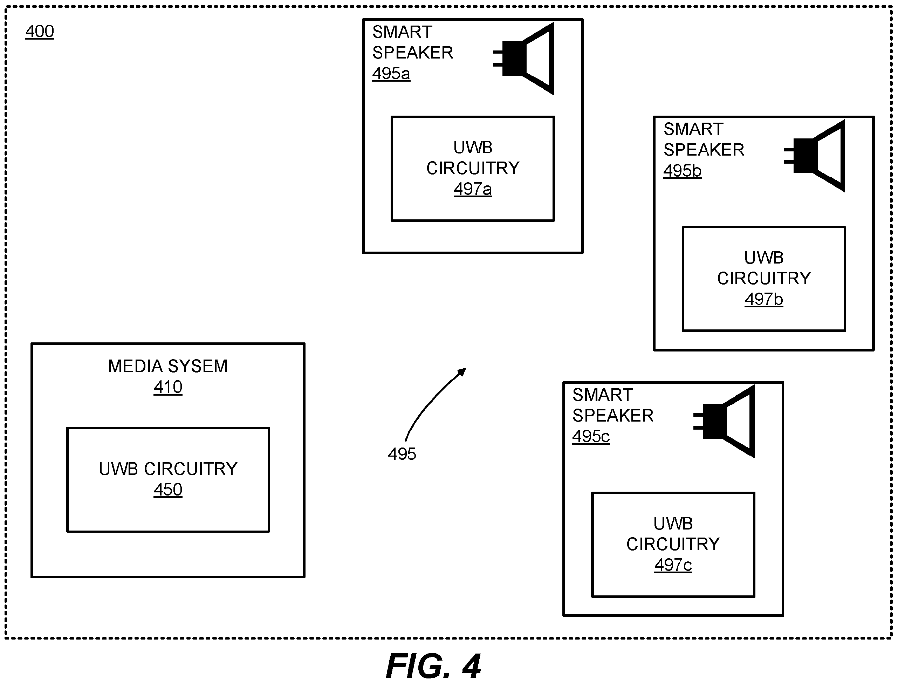

It will be understood that, in or more embodiments an audio configuration system is a system that interfaces with an existing media controller or other audio system (e.g., the infotainment system 110), while in one or more other embodiments, an audio configuration system forms a portion of a such a media controller or audio system (e.g., forming a part of the infotainment system 110 of FIG. 1). In one or more other embodiments, functions of a system may be distributed between multiple devices, as described below in connection with FIG. 4

FIG. 4 is a schematic illustration of an example environment 400 in which embodiments herein may be practiced. The environment 400 includes a media system 410 having UWB circuitry 450 (e.g., a UWB controller 250 or components thereof, and/or transceiver(s) 275 as nonlimiting examples) interacts with one or more smart speaker devices, represented by the smart speakers 495a, 495b, 495c having respective UWB circuitry 497a, 497b, 497c. For clarity certain elements are not shown explicitly. For example, the UWB circuitry 450, 497a, 497b, 497c each include one or more UWB transmitters, receivers, or transceivers as described above in connection with FIGs. 1-3. It will be understood that the smart speakers 495 are shown as non-limiting examples as UWB devices which can operate in initiator and/or responder modes as described above.

For instance, in one or more embodiments, the media system 410 acts as an initiator mode and determines the spatial configuration of the surroundings and appropriate audio configuration parameters. The media system 410 may then transmit instructions to a smart speaker 495 over a wired interface or wirelessly using UWB radio signals, causing that smart speaker 495 to output audio signals in accordance with the audio configuration parameters. In or more embodiments, a system such as the media system 410 may determine locations of smart speakers 495in addition to determining locations of other objects. In such embodiments, audio configuration parameters may represent desired beamforming parameters corresponding to a smart speaker 495 directing sound toward a particular location (e.g., toward the location of a particular seat in a vehicle or another environment, or toward a particular portion of a room, as nonlimiting examples). In other embodiments, a smart speaker 495 may act as initiator and perform functions described as being performed by the media system 410 or similar systems such (e.g., the infotainment system 110). In still other embodiments multiple smart speakers may be operated as initiators in a cooperative manner. For instance, each smart speaker 495 may determine the spatial configuration of a portion of a room or other environment and communicate with the media system 410 to relay measurements made by that smart speaker 495 of its immediate surroundings for processing by the media system 410.

Features of embodiments may be understood by way of one or more of the following examples:
Example 1: An audio configuration system including control circuitry configured to be coupled to radio circuitry and to audio circuitry; and memory coupled to the control circuitry. The system is configured to receive, from UWB radio circuitry coupled to the control circuitry, UWB return signals corresponding to pulsed UWB probe signals transmitted by the UWB radio circuitry; determine a spatial orientation of one or more objects by analyzing the UWB return signals using the control circuitry; and to cause audio circuitry coupled to the control circuitry to output audio signals to one or more speakers in accordance with audio configuration parameters corresponding to the spatial orientation of the one or more objects.
Example 2: The system of Example 1 in which, when the audio configuration system uses the control circuitry to analyze the UWB return signals, the control circuitry is configured to determine times-of-flight of the UWB return signals from the one or more objects.
Example 3: The system of Example 1 or Example 2 in which, when the audio configuration system uses the control circuitry to analyze the UWB return signals, the control circuitry is configured to determine angles-of-arrival of the UWB return signals from the one or more objects.
Example 4: The system of any of Examples 1-3 in which the system is further configured to: determine a memory location in the memory using the spatial orientation of the one or more objects; and retrieve, as the audio configuration parameters, configuration parameters stored at the memory location.
Example 5: The system of any of Examples 1-4 in which causing the audio circuitry to output the audio signals to the one or more speakers in accordance with the audio configuration parameters includes causing a phase shift to at least one of the audio signals.
Example 6: The system of any of Examples 1-5 in which causing the audio circuitry to output the audio signals to the one or more speakers in accordance with the audio configuration parameters includes causing an amplitude change to at least one of the audio signals.
Example 7: The system of any of Examples 1-6 in which causing the audio circuitry to output the audio signals to the one or more speakers in accordance with the audio configuration parameters includes causing a phase shift and an amplitude change to at least one of the audio signals.
Example 8: The system of any of Examples 1-7 in which causing the audio circuitry to output the audio signals to the one or more speakers in accordance with the audio configuration parameters includes applying a frequency-dependent amplitude adjustment to at least one of the audio signals.
Example 9: The system of any of Examples 1-8 in which the system is further configured to receive additional UWB return signals corresponding to additional pulsed UWB probe signals using the UWB radio circuitry; determine that the spatial orientation of the one or more objects has changed to a different spatial orientation by analyzing the additional UWB return signals using the control circuitry; determine different audio configuration parameters that correspond to the different spatial orientation of the one or more objects; and cause the audio circuitry to output subsequent audio signals to the one or more speakers in accordance with the different audio configuration parameters.
Example 10: The system of any of Examples 1-9 in which, when the control circuitry analyzes the UWB return signals, the control circuitry is configured to determine, using the UWB return signals, a location and an incline angle of a vehicle passenger seat based on an angle of arrival and a time of flight of one or more of the UWB return signals.
Example 11: The system of any of Examples 1-10 in which the one or more objects are disposed within a passenger cabin of a vehicle.
Example 12: The system of any of Examples 1-11 in which, when the control circuitry analyzes the UWB return signals, the control circuitry is configured to determine, using the UWB return signals, that one or more windows of a vehicle passenger cabin are open.
Example 13: A method of tuning outputs of audio circuitry using an audio configuration system. The method includes receiving, using UWB radio circuitry coupled to control circuity of the audio configuration system, UWB return signals corresponding to pulsed UWB probe signals. The method further includes determining a spatial orientation of one or more objects by analyzing the UWB return signals using control circuitry of the audio configuration system. The method further includes determining audio configuration parameters corresponding to the spatial orientation of the one or more objects using the control circuitry. The method further includes operating the control circuitry to cause the audio circuitry to output audio signals to one or more speakers in accordance with the audio configuration parameters.
Example 14: the method of Example 13 in which determining the spatial orientation of the one or more objects includes using the control circuitry to determine times-of-flight of the UWB return signals from the one or more objects.
Example 15: the method of Example 13 or Example 14 in which determining the spatial orientation of the one or more objects includes using the control circuitry to determine angles-of-arrival of the UWB return signals from the one or more objects.
Example 16: the method of any of Examples 13-15, further including receiving, using UWB radio circuitry coupled to control circuity of the audio configuration system, UWB return signals corresponding to pulsed UWB probe signals; The method also includes determining a spatial orientation of one or more objects by analyzing the UWB return signals using control circuitry of the audio configuration system. The method also includes determining audio configuration parameters corresponding to the spatial orientation of the one or more objects using the control circuitry. The method also includes operating the control circuitry to cause the audio circuitry to output audio signals to one or more speakers in accordance with the audio configuration parameters.
Example 17: The method of any of Examples 13-16, in which causing the audio circuitry to output audio signals to one or more speakers in accordance with the audio configuration parameters includes applying a phase shift to one or more of the audio signals;
Example 18: The method of any of Examples 13-17, in which causing the audio circuitry to output audio signals to one or more speakers in accordance with the audio configuration parameters includes adjusting an amplitude of one or more of the audio signals.
Example 19: The method of any of Examples 13-18 in which causing the audio circuitry to output audio signals to one or more speakers in accordance with the audio configuration parameters includes applying a phase shift to one or more or the audio signals and adjusting an amplitude of one or more of the audio signals.
Example 20: The method of any of Examples 13-19, in which causing the audio circuitry to output audio signals to one or more speakers in accordance with the audio configuration parameters includes applying a frequency-dependent amplitude adjustment to the one or more of the audio signals.
Example 21: The method of any of Examples 13-20 in which determining the spatial orientation of the or more objects includes determining a distance and incline angle of a vehicle passenger seat based on an angle-of-arrival (AoA) and a time-of-flight (ToF) of one or more of the UWB return signals.
Example 22: The method of any of Examples 13-21 in which at least a portion of the UWB return signals includes UWB data signals configured for communication with the control circuitry.
Example 23: The method of any of Examples 13-22 in which the one or more objects are disposed with a passenger cabin of a vehicle.
Example 24: The method of any of Examples 13-23 in which determining the spatial orientation of the one or more objects includes determining, based on the UWB return signals, that one or more windows of a vehicle passenger cabin are open.
Example 25: The method of any of Examples 13-24 that further includes receiving additional UWB return signals corresponding to additional pulsed UWB probe signals using the UWB radio circuitry. The method also includes determining that the spatial orientation of the one or more objects has changed to a different spatial orientation by analyzing the additional UWB return signals using the control circuitry. The method also includes determining different audio configuration parameters corresponding to the different spatial orientation of the one or more objects using the control circuitry. The method also includes operating the control circuitry to cause the audio circuitry to output subsequent audio signals to the one or more speakers in accordance with the different audio configuration parameters.

The preceding detailed description and examples are merely illustrative in nature and are not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

It should be understood that this invention is not limited in its application to the details of construction and the arrangement of components set forth in the preceding description or illustrated in the accompanying drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The preceding discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The preceding detailed description is to be read with reference to the figures, in which like elements in different figures have like reference numerals. The Figures, which are not necessarily to scale, depict selected embodiments and are not intended to limit the scope of embodiments of the invention. Skilled artisans will recognize the examples provided herein have many useful alternatives and fall within the scope of embodiments of the invention.

The connecting lines shown in the various figures contained herein are intended to represent exemplary functional relationships and/or physical couplings between the various elements. It should be noted that many alternative or additional functional relationships or physical connections may be present in one or more embodiments of the subject matter. In addition, certain terminology may also be used herein for the purpose of reference only, and thus are not intended to be limiting, and the terms "first," "second" and other such numerical terms referring to structures do not imply a sequence or order unless clearly indicated by the context.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in one or more embodiments of the depicted subject matter.

## Claims

1. An audio configuration system comprising:
control circuitry configured to be coupled to radio circuitry and to audio circuitry; and memory coupled to the control circuitry;
wherein the audio configuration system is configured to:
receive, from ultrawideband, UWB, radio circuitry coupled to the control circuitry, UWB return signals corresponding to pulsed UWB probe signals transmitted by the UWB radio circuitry;
determine a spatial orientation of one or more objects by analyzing the UWB return signals using the control circuitry; and
cause audio circuitry coupled to the control circuitry to output audio signals to one or more speakers in accordance with audio configuration parameters corresponding to the spatial orientation of the one or more objects.

2. The audio configuration system of claim 1, wherein, when the audio configuration system uses the control circuitry to analyze the UWB return signals, the control circuitry is configured to determine times-of-flight of the UWB return signals from the one or more objects.

3. The audio configuration system of claim 1 or 2, wherein, when the audio configuration system uses the control circuitry to analyze the UWB return signals, the control circuitry is configured to determine angles-of-arrival of the UWB return signals from the one or more objects.

4. The audio configuration system of any preceding claim, wherein the audio configuration system is further configured to:
determine a memory location in the memory using the spatial orientation of the one or more objects; and
retrieve, as the audio configuration parameters, configuration parameters stored at the memory location.

5. The audio configuration system of any preceding claim, wherein causing the audio circuitry to output the audio signals to the one or more speakers in accordance with the audio configuration parameters includes:
causing a phase shift to at least one of the audio signals;
causing an amplitude change to at least one of the audio signals; or
causing a phase shift and an amplitude change to at least one of the audio signals.

6. The audio configuration system of claim 5, wherein causing the amplitude change to at least one of the audio signals includes applying a frequency-dependent amplitude adjustment to at least one of the audio signals.

7. The audio configuration system of any preceding claim wherein the audio configuration system is further configured to:
receive additional UWB return signals corresponding to additional pulsed UWB probe signals using the UWB radio circuitry;
determine that the spatial orientation of the one or more objects has changed to a different spatial orientation by analyzing the additional UWB return signals using the control circuitry;
determine different audio configuration parameters that correspond to the different spatial orientation of the one or more objects; and
cause the audio circuitry to output subsequent audio signals to the one or more speakers in accordance with the different audio configuration parameters.

8. The audio configuration system of any preceding claim, wherein, when the control circuitry analyzes the UWB return signals, the control circuitry is configured to:
determine, using the UWB return signals, a location and an incline angle of a vehicle passenger seat based on an angle of arrival and a time of flight of one or more of the UWB return signals.

9. The audio configuration system of any preceding claim, wherein at least a portion of the UWB return signals includes UWB data communication signals configured for communication with the control circuitry.

10. The audio configuration system of any preceding claim, wherein, when the control circuitry analyzes the UWB return signals, the control circuitry is configured to: determine, using the UWB return signals, that one or more windows of a vehicle passenger cabin are open.

11. A method of tuning outputs of audio circuitry using an audio configuration system, the method comprising:
receiving, using UWB radio circuitry coupled to control circuity of the audio configuration system, UWB return signals corresponding to pulsed UWB probe signals;
determining a spatial orientation of one or more objects by analyzing the UWB return signals using control circuitry of the audio configuration system;
determining audio configuration parameters corresponding to the spatial orientation of the one or more objects using the control circuitry; and operating the control circuitry to cause the audio circuitry to output audio signals to one or more speakers in accordance with the audio configuration parameters.

12. The method of claim 11, wherein determining the spatial orientation of the one or more objects includes using the control circuitry to determine times-of-flight of the UWB return signals from the one or more objects.

13. The method of claim 12, wherein determining the spatial orientation of the one or more objects includes using the control circuitry to determine angles-of-arrival of the UWB return signals from the one or more objects.

14. The method of any of claims 11 to 13, further comprising:
determining, using the control circuitry, a memory location in memory coupled to the control circuitry wherein the control circuitry determines, the memory location based on the spatial orientation of the one or more objects; and
retrieving, as the audio configuration parameters, configuration parameters stored at memory location.

15. The method of any of claims 11 to 14, wherein causing the audio circuitry to output audio signals to one or more speakers in accordance with the audio configuration parameters includes:
applying a phase shift to one or more of the audio signals;
adjusting an amplitude of one or more of the audio signals; or
applying a phase shift to one or more or the audio signals and adjusting an amplitude of one or more of the audio signals.
